Europäisches Patentamt

European Patent Office

Office européen des brevets

(11) Publication number:     **0 676 773 A1**

## EUROPEAN PATENT APPLICATION
### published in accordance with Art. 158(3) EPC

(21) Application number: **94931163.3**

(22) Date of filing: **26.10.94**

(86) International application number:
**PCT/JP94/01797**

(87) International publication number:
**WO 95/12204 (04.05.95 95/19)**

(51) Int. Cl.⁶: **H01B 1/06**

---

(30) Priority: **27.10.93 JP 289849/93**

(43) Date of publication of application:
**11.10.95 Bulletin 95/41**

(84) Designated Contracting States:
**DE FR GB**

(71) Applicant: **KABUSHIKI KAISYA ADVANCE**
**5-7, Nihonbashi Kobuna-cho**
**Chuo-ku**
**Tokyo 103 (JP)**

(72) Inventor: **MIZUNO, Yoshiki**
**K. K. Advance Paidia Lab.,**
**3-32-20, Honcho**
**Funabashi-shi,**
**Chiba 273 (JP)**
Inventor: **BABA, Yoshimi**
**K. K. Advance Paidia Lab.,**
**3-32-20, Honcho**
**Funabashi-shi,**
**Chiba 273 (JP)**

(74) Representative: **Rinuy, Santarelli**
**14, avenue de la Grande Armée**
**F-75017 Paris (FR)**

---

(54) **IONIC CONDUCTION METHOD.**

(57) An electrolytic solution, containing dissociated ions, is confined in pores of a porous body so as to reduce the size of the ions, including the solvate. As a result, the fluid resistance decreases, and the mobility of the ions becomes larger than the intrinsic mobility of the solutions, so that the transportation of ions can be more efficient.

Method of Ion Conduction

TECHNICAL FIELD

The present invention relates to a method for transferring of ions. More particular, it relates to a method for transferring ions using micropores. The present invention entails sealing an electrolyte solution in micropores so as to suppress the solvation of ions and to reduce the effective solvated ion radius, whereby the mobility of ions is increased and the efficient ion transference is effected.

BACKGROUND ART

The art of ion conduction is required in fields using electrolytes such as primary cells, secondary cells, electrochromic elements, electric double layer capacitors, sensors, etc. and is being widely studied and commercialized. At the present time, aqueous solutions are used for almost all of the electrolytes now in commercial use. This is because water has a dielectric constant of as large as 78.3, compared with other solvents and is superior in the ability to stabilize ions by solvation and because it is low in viscosity, and therefore, offers little resistance to the mobility of the dissociated ions and therefore enables the ion conductance to be raised.

In the art of ion transference using aqueous solutions, use is sometimes made of the electrolyte in the state of the aqueous solution such as in a lead storage cell, but sometimes starch, carboxymethyl cellulose, sodium acrylate, or other gelation agents are added to make the solution paste-like in form, such as in a dry cell.

If an aprotic solvent is used for the electrolyte solution, it becomes possible to use lithium etc. with its strong reducing power for the negative electrode, and therefore, this is a focus of active research and development. Some products have been commercialized.

With a solid electrolyte, there is no fear of leakage and the corrosibility also becomes smaller, so active research and development are under way on its use, but the ion conductance of a solid electrolyte is smaller compared with a liquid and in many cases a high temperature is required as the temperature of actual use.

If the ion mobility is low, as is widely known, the ohm loss causes a deterioration of the energy efficiency. Further, the gradient of ion concentration of nearby electrolytes caused by the electrode reaction assists needle-like precipitation of the ions on the electrodes, which becomes a factor shortening the lifetime of the device. In this sense, the ion mobility of conventional electrolytes cannot be said to have been sufficient. In particular, it was a factor limiting the application of solid electrolytes.

DISCLOSURE OF THE INVENTION

Accordingly, the object of the present invention is to provide a method for fundamentally raising the mobility of ions and to obtain a high performance ion conductive material.

In accordance with the present invention, there is provided a method of ion conduction characterized by sealing in the pores of a porous body an electrolyte solution in which an electrolyte is dissociated and present as ions so as to reduce the size of the solvated ions and reduce the fluid resistance, whereby the mobility of the ions is increased to more than the value in the solution.

BEST MODE FOR CARRYING OUT THE INVENTION

According to the present invention, to solve the above problem, use is made of a thin film of a porous body comprising a polymer, glass, or ceramic so as to reduce the effective radius of the ions obtained by solvation, whereby the mobility of the ions is increased.

This principle is based on the fact that in Stokes' viscosity equation (I),

$$F = \zeta v \qquad\qquad (I)$$

where, $\zeta = 6\pi r \eta_0$

F: resistance
v: speed of mobility
r: radius
$\eta_0$: viscosity

when the r in equation (I) is reduced, it is possible to reduce the resistance in ion transference and, as a result, the mobility of the ions can be increased. For example, it is said that with Na+ in methanol, more than four to seven molecules solvate with the solvent and that with Li+ as well, three to six molecules solvate with an organic solvent. It is calculated that the ion radius of Na+ is 0.95 Angstroms and the effective ion radius of six molecules of solvated Na+ is 6.2 Angstroms, so even if all of the solvated molecules are eliminated, approximately a 6.5-fold conductance can be expected.

In the present invention, it has been discovered that the solvated ions in the micropores of a porous body have less solvation numbers than in the normal solution. Therefore, the inventors succeeded in bringing about a fundamental increase in the mobility of ions using the above principle.

The porous body usable in the present invention preferably is a thin film of a thickness of 0.1 $\mu$m to 100 $\mu$m, more preferably 0.1 $\mu$m to 25 $\mu$m. The material of the porous body may be a polymer, glass, ceramic, or a composite of the same. When the thickness of the porous body is less than 0.1 $\mu$m, the mechanical strength drops, and therefore, handling and use for manufacturing processes become difficult. On the other hand, when the thickness of the porous body is more than 100 $\mu$m, the effective resistance of the ion conduction increases, so this is not preferred. The ratio of the empty micropores to the volume of the porous body, as a whole, that is, the porosity, is preferably 0.1 to 95%. In the prior art, the mobility of ions in micropores was from 1/100th to 1/10th that in the solution, so a porosity of 0.1% or more can be sufficiently expected to improve the conductance of the film.

On the other hand, when over 95%, the mechanical strength becomes smaller and sometimes the film is hard to use in practice. The shape of the pores need only be one by which the pores penetrate through the film in the thickness direction and is preferably columnar parallel to the thickness direction of the film. If the pores are net shaped or very uneven, the ion solvation and dissociation reaction are repeated, so the mobility of the ions is inhibited. Accordingly, it can be expected that this would not be too desirable. The average size of the pores is preferably 0.01 $\mu$m to 1 $\mu$m, more preferably 0.01 $\mu$m to 0.1 $\mu$m. When the micropore size is less than 0.01 $\mu$m, the resistance between the solvated ions and the pore walls becomes greater and sometimes the mobility of the ions is decreased.

On the other hand, pores of a size of over 0.1 $\mu$m are not desirable since there is no reduction in the Stokes' diameter and therefore it is hard to expect an increase in mobility. Further, the surface of the film material may be improved by a surfactant, heat treatment, etc.

The porous body which can be used in the present invention is preferably comprised of a material which has the function of a support for an electrolyte solution and is superior in mechanical strength as well. From the viewpoint of chemical stability, as the polymer material, use may be made of polyolefin, polyfluoroethylene, polyvinylidene fluoride, polycarbonate, polyester, etc. As a glass, use may be made of silica glass, silicate glass, borate glass, etc. As a ceramic, use may be made of $Al_2O_3$, $ZrO_2$, etc. The method of forming the film is not limited, but for example it is possible to irradiate a polycarbonate film, for example, with charged particles in a nuclear reactor and form pores along the paths of flight of the charged particles by alkali etching.

The electrolyte solution usable in the present invention is obtained by dissolving an alkali metal salt or protate in an aqueous or nonaqueous solution. As such an alkali metal salt, specific mention may be made of lithium perchlorate, lithium trifluoromethylsulfonate, lithium borofluoride, lithium hexafluorophosphate, sodium perchlorate, sodium trifluoromethylsulfonate, sodium chloride, sodium iodide, and sodium thiocyanate. As the nonaqueous solution, mention may be specifically made of propylene carbonate, ethylene carbonate, dimethoxyethane, tetrahydrofuran, N,N-dimethylformamide, hexamethyl-sulfamide, N-methylpyrrolidone, dimethylsulfoxide, acetonitrile, etc.

EXAMPLES

The present invention will be explained in further detail below based upon Examples, but of course the scope of the present invention is not limited to these Examples.

Examples 1 to 5

Nuclear Pore (registered trademark of Nomura Microscience) made of polycarbonate having micropores of an average size of 0.015 $\mu$m (Example 1), 0.03 $\mu$m (Example 2), 0.05 $\mu$m (Example 3), 0.08 $\mu$m (Example 4), and 0.1 $\mu$m (Example 5) was used. Using a solution obtained by dissolving 11% by weight of lithium perchlorate in a solution obtained by mixing propylene carbonate and dimethoxyethane in a ratio of 1:1 for the electrolyte solution, the ion conductance was measured by the exchange impedance method. The conductances were divided by the conductance of the solution ($1.28 \times 10^{-2}$) and the porosity. The values found (accelerated transference number of ions) are shown in Table 1.

The accelerated transference numbers were larger than one in each case and the ion conductances in the film were larger than even in the solution.

Table 1

|  | Micropore size ($\mu$m) | Conductance/Porosity (Scm$^{-1}$) | Accelerated transference number (-) |
|---|---|---|---|
| Example 1 | 0.015 | $4.7 \times 10^{-2}$ | 3.7 |
| Example 2 | 0.03 | $6.1 \times 10^{-2}$ | 4.8 |
| Example 3 | 0.05 | $3.9 \times 10^{-2}$ | 3.0 |
| Example 4 | 0.08 | $1.7 \times 10^{-2}$ | 1.3 |
| Example 5 | 0.1 | $2.6 \times 10^{-2}$ | 2.0 |

Examples 6 to 10

Nuclear Pore (registered trademark of Nomura Microscience) made of polycarbonate having micropores of average sizes of 0.015 $\mu$m (Example 6), 0.03 $\mu$m (Example 7), 0.05 $\mu$m (Example 8), 0.08 $\mu$m (Example 9), and 0.1 $\mu$m (Example 10) was used. Using a solution obtained by dissolving 7.2% by weight of potassium chloride in pure water for the electrolyte solution, the ion conductance was measured by the exchange impedance method. The conductances were divided by the conductance of the solution (1.12 $\times 10^{-1}$) and the porosity. The values found (accelerated transference number of ions) are shown in Table 2.

The accelerated transference numbers were 1 or more in each case and the ion conductances in the film were larger than in the solution.

Table 2

|  | Micropore size ($\mu$m) | Conductance/Porosity (Scm$^{-1}$) | Accelerated transference number (-) |
|---|---|---|---|
| Example 6 | 0.015 | $1.4 \times 10^{-0}$ | 12.5 |
| Example 7 | 0.03 | $1.9 \times 10^{-0}$ | 17.0 |
| Example 8 | 0.05 | $9.2 \times 10^{-1}$ | 8.2 |
| Example 9 | 0.08 | $3.8 \times 10^{-1}$ | 3.4 |
| Example 10 | 0.1 | $4.3 \times 10^{-1}$ | 3.8 |

Comparative Example

A polymer thin film made of a net-like polyethylene having micropores of an average size of 0.015 $\mu$m (Comparative Example) was used. Using a solution obtained by dissolving 11% by weight of lithium perchlorate in a solution obtained by mixing propylene carbonate and dimethoxyethane in a ratio of 1:1 as the electrolyte solution, the ion conductance was measured by the exchange impedance method. The conductance was divided by the conductance of the solution (1.28 $\times$ 10$^{-2}$) and the porosity. The value found (accelerated transference number of ions) is shown in Table 3.

The accelerated transference number was smaller than one, that is, about 1/20th of that in the solution and far smaller compared with Examples 1 to 10.

Table 3

|  | Micropore size ($\mu$m) | Conductance/Porosity (Scm$^{-1}$) | Accelerated transference number (-) |
|---|---|---|---|
| Comp. Ex. | 0.015 | $6.5 \times 10^{-4}$ | 0.05 |

4

INDUSTRIAL APPLICABILITY

According to the present invention, it is possible to use the pores of a porous body to control the solvated molecules of ions, whereby the mobility of ions is increased. Accordingly, the present invention can be used for fields using electrolytes such as primary cells, secondary cells, electrochromic elements, electric double layer capacitors, and sensors.

**Claims**

1. A method of ion conduction characterized by sealing in the micropores of a porous body an electrolyte solution in which an electrolyte is dissociated and present as ions so as to reduce the diameter of the solvated ions and to reduce the fluid resistance, whereby the mobility of the ions is increased to more than the value specific to the solution.

2. A method of ion conduction as claimed in claim 1, wherein the average size of the micropores is 0.01 $\mu$m to 1 $\mu$m and the micropores penetrate through the film in the thickness direction.

3. A method of ion conduction as claimed in claim 1, wherein the ions are alkali metal ions or protons.

4. A method of ion conduction as claimed in claim 2, wherein the ions are alkali metal ions or protons.

5. A method of ion conduction as claimed in claim 1, wherein the porous body is a thin film of a thickness of 0.1 to 100 $\mu$m and has a shape with micropores penetrating through the film in the thickness direction.

INTERNATIONAL SEARCH REPORT

International application No.

PCT/JP94/01797

**A. CLASSIFICATION OF SUBJECT MATTER**

Int. Cl$^6$   H01B1/06

According to International Patent Classification (IPC) or to both national classification and IPC

**B. FIELDS SEARCHED**

Minimum documentation searched (classification system followed by classification symbols)

Int. Cl$^6$   H01B1/06

Documentation searched other than minimum documentation to the extent that such documents are included in the fields searched

Jitsuyo Shinan Koho          1926 - 1994
Kokai Jitsuyo Shinan Koho     1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US, A, 4849311 (Tonen Corp.),<br>July 18, 1989 (18. 07. 89)<br>& JP, A, 1-158051 | 1, 3, 4<br>2, 5 |

☐ Further documents are listed in the continuation of Box C.     ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| January 10, 1995 (10. 01. 95) | January 31, 1995 (31. 01. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)